# EUROPÄISCHE PATENTSCHRIFT

(11) **EP 3 973 616 B1**
(45) Veröffentlichungstag und Bekanntmachung des Hinweises auf die Patenterteilung: **14.01.2026**
(21) Anmeldenummer: 20722452.8
(22) Anmeldetag: 16.04.2020
(51) Int. Cl.: H02K 1/28, H02K 1/32, H02K 7/00, H02K 9/19, H02K 15/02

(54) **ROTOR MIT OPTIMIERTER ROTORBLECHGEOMETRIE ZUR FLUIDFÜHRUNG**
ROTOR WITH AN OPTIMIZED ROTOR LAMINATE GEOMETRY FOR FLUID GUIDANCE
ROTOR PRÉSENTANT UNE GÉOMÉTRIE DE TÔLES DE ROTOR OPTIMISÉE POUR UN GUIDAGE DE FLUIDE

(30) Priorität: 21.05.2019 DE 102019113456
(43) Veröffentlichungstag der Anmeldung: 30.03.2022
(73) Patentinhaber: Schaeffler Technologies AG & Co. KG, 91074 Herzogenaurach (DE)
(72) Erfinder: ESLY, Florian, 77815 Bühl (DE)
(74) Vertreter: Schaeffler Technologies
(86) Internationale Anmeldenummer: PCT/DE2020/100308
(87) Internationale Veröffentlichungsnummer: WO 2020/233736

(56) Entgegenhaltungen:
- FR-A1- 3 034 583
- US-A- 5 760 520
- US-A1- 2012 086 291
- US-A1- 2015 069 863

## Beschreibung

Die Erfindung betrifft einen Rotor für eine elektrische Maschine, mit einem Rotorblechpaket, das mehrere axial geschichtete Rotorbleche, die jeweils um einen vorbestimmten Verdrehungswinkel zu einem axial benachbarten Rotorblech angeordnet sind, aufweist, und mit einer Rotorwelle, auf der die Rotorbleche aufgesteckt sind, wobei die Rotorwelle eine drehmomentübertragende Verbindung mit in den Rotorblechen ausgebildeten Nuten bildet.

Aus dem Stand der Technik sind bereits Rotoren für elektrische Maschinen, die aus Blechpaketen, sogenannten "rotor stacks" oder "stacks", zusammengesetzt sind, bekannt. Diese Blechpakete werden üblicherweise formschlüssig über eine Feder-Nut-Verbindung oder reibschlüssig über eine Pressverbindung mit einer Welle verbunden. Wenn die elektrische Maschine im Ölraum angeordnet ist, kann das Öl/Hydraulikmittel/Fluid/Kühlmittel unter anderen zur Kühlung des Rotors genutzt werden. Dazu wird eine Ölführung in der Rotorwelle benötigt, durch die das Öl radial durch die Rotorwelle zu dem Rotorblechpaket oder den Rotorblechpaketen gefördert wird.

Der Stand der Technik hat jedoch immer den Nachteil, dass in den Rotorblechen eine Öffnung oder ein Kanal erforderlich ist, um das Öl axial nach außen zu führen. Dafür wird üblicherweise eine zusätzliche Öffnung im Rotorblechpaket vorgehalten. Insbesondere wenn eine Verschränkung der Rotorbleche erforderlich ist und somit eine Vielzahl von Nuten für die Momentübertragung über eine Feder-Nut-Verbindung in den Rotorblechen ausgebildet werden müssen, sind die Nuten und/oder die Feder in jedem Rotorblech unterschiedlich angeordnet, so dass durch die vielen versetzten Nuten oftmals kein Bauraum für eine Ölführungsöffnung vorhanden ist.

Ein Rotor gemäß dem Oberbegriff des Anspruch 1 ist in der US2015069863 A1 gezeigt. Hinsichtlich weiteren Stands der Technik sei auf die US5760520A, US2012086291A1 sowie auf die FR3034583A1 verwiesen.

Es ist also die Aufgabe der Erfindung, die Nachteile aus dem Stand der Technik zu vermeiden oder wenigstens zu mildern. Insbesondere soll ein Rotor bereitgestellt werden, der zum einen einfach und kostengünstig herstellbar ist und der eine auf besonders einfache Weise eine Kühlmittelführung, die Kühlmittel, das beispielsweise durch die Rotorwelle hindurch geführt wird, axial verteilt, vorsieht.

Diese Aufgabe wird bei einer gattungsgemäßen Vorrichtung erfindungsgemäß dadurch gelöst, dass der Verdrehungswinkel und die Breite der Nuten so aufeinander abgestimmt sind, dass ein sich axial durch den Rotor hindurch erstreckender Kanal zur Fluidführung, insbesondere Kühl(öl)führung, gebildet wird. Das heißt, dass die Nuten axial benachbarter Rotorbleche zumindest teilweise überlappend angeordnet sind, so dass die Nuten axial miteinander verbunden sind. Dies hat den Vorteil, dass die Nuten in den Rotorblechen, die zur Momentübertragung vorgesehen werden müssen, zusätzlich als Ölführungsnut dienen. Dadurch muss vorteilhafterweise keine zusätzliche extra definierte Öffnung im Blechpaket vorgehalten werden. Insbesondere können in jedem Rotorblech mehrere Nuten ausgebildet sein, wobei zumindest eine der Nuten zur Drehmomentübertragung und zumindest eine andere der Nuten zur Fluidführung dient. Dadurch werden die Momentenübertragung und die Fluidführung gleichzeitig sichergestellt.

Vorteilhafte Ausführungsformen sind in den Unteransprüchen beansprucht und werden nachfolgend näher erläutert.

Auch ist es zweckmäßig, wenn die Rotorwelle als eine Hohlwelle ausgebildet ist, in der zumindest ein sich radial durchgehend erstreckender Fluidkanal, der in die Nuten mündet, ausgebildet ist. Dadurch wird das Innere der Rotorwelle mit den Nuten verbunden, so dass das Kühlmittel/Fluid zu den Nuten hin gefördert werden kann und von dort aus axial weiter verteilt werden kann.

Ferner ist es bevorzugt, wenn in jedem Rotorblech zumindest so viele Nuten ausgebildet sind wie Rotorbleche ein Rotorblechpaket bilden, wobei je nach axialer Position im Rotorblechpaket eine andere der Nuten die drehmomentübertragende Verbindung bildet. Dadurch wird ermöglicht, dass die Verschränkung der Rotorbleche besonders einfach über die Auswahl einer bestimmten Nut des Rotorblechs erreicht wird. Mit anderen Worten hält beispielsweise die zweite Nut einen anderen Verdrehungswinkel zu dem in Axialrichtung ersten Rotorblech vor als die dritte Nut, so dass das in Axialrichtung zweite Rotorblech über die zweite Nut mit der Rotorwelle verbunden wird.

Zudem ist es bevorzugt, wenn die Nuten, die nicht die drehmomentübertragende Verbindung bilden, zur Fluidführung dienen. Da in jedem Rotorblech mehrere Nuten ausgebildet sind, aber immer nur eine der Nuten (bei einer Feder-Nut-Verbindung) über eine Feder mit der Rotorwelle verbunden wird, stehen die übrigens Nuten, die im Rotorblechpaket für andere Rotorbleche zur Drehmomentübertragung dienen, in dem einen Rotorblech zur Kühlmittelführung zur Verfügung.

Gemäß einer besonders bevorzugten Ausführungsform kann der Verdrehungswinkel so gewählt sein, dass er eine Verschränkung der Rotorbleche vorhält. Das heißt, dass der Verdrehungswinkel unterschiedlich zu einem Polwinkel, mit dem Pole des Rotors in Umfangsrichtung beabstandet angeordnet sind, ist, und zwar insbesondere um den Verschränkungswinkel unterschiedlich zu dem Polwinkel. So wird in besonders einfacher Weise die Verschränkung des Rotors realisiert.

In einer vorteilhaften Weiterbildung kann eine der Nuten, die die drehmomentübertragende Verbindung zwischen der Rotorwelle und einem ersten Rotorblech bildet, zu einer anderen der Nuten, die die drehmomentübertragende Verbindung zwischen der Rotorwelle und einem Rotorblech, das axial benachbart zu dem ersten Rotorblech ist, bildet, um den Verdrehungswinkel versetzt angeordnet sein. Dadurch wird die oben beschrieben Verschränkung der Rotorbleche umgesetzt.

Auch ist es bevorzugt, wenn eine der Nuten, die die drehmomentübertragende Verbindung zwischen der Rotorwelle und einem ersten Rotorblech bildet, zu einer anderen der Nuten, die die drehmomentübertragende Verbindung zwischen der Rotorwelle und einem Rotorblech, das axial beabstandet zu dem ersten Rotorblech ist, bildet, um einen Winkel, der unterschiedlich zu dem Verdrehungswinkel ist, versetzt angeordnet ist. Dies ist insbesondere dadurch bedingt, dass der Verdrehungswinkel unterschiedlich zu dem Polwinkel ist, so dass die Nuten nicht gleichverteilt angeordnet werden können. Insbesondere ist die Nut, die dem in Axialrichtung ersten Rotorblech zur Drehmomentübertragung zugeordnet ist, um den zum Verdrehungswinkel unterschiedlichen Winkel zu der Nut, die dem in Axialrichtung letzten Rotorblech zur Drehmomentübertragung zugeordnet ist, verdreht.

Auch ist es von Vorteil, wenn die Rotorwelle durch eine oder mehrere Feder-Nut-Verbindungen mit den in den Rotorblechen ausgebildeten Nuten zur Drehmomentübertragung verbunden ist. Dadurch kann die Anordnung der Nuten zusätzlich beeinflusst werden. Außerdem wird die Kraftverteilung verbessert.

Besonders vorteilhaft ist es, wenn die Rotorbleche als Gleichteile ausgebildet sind. Dadurch können die Rotorbleche mit dem gleichen Werkzeug, beispielsweise mit einem Stanzwerkzeug, hergestellt werden. Somit lässt sich der Rotor kostengünstig fertigen. Zudem wird dadurch, dass nur eine Art von Rotorblechen benötigt wird, ausgeschlossen, dass eine bestimmte Art von Rotorblechen in der Montage beispielsweise aufgrund einer Verwechslung fehlt.

Mit anderen Worten betrifft die Erfindung ein Rotorblechpaket mit mehreren Nuten, die unterschiedlich beabstandet in Umfangsrichtung angeordnet sind. Dabei werden die Nuten, die nicht zur Drehmomentübertragung durch eine Feder-Nut-Verbindung zu einer Rotorwelle genutzt werden, axial verbunden angeordnet, so dass sie als Fluidführung dienen können. Die Rotorwelle weist radial durchgehende Löcher auf, um einen Fluidkanal von den Löchern zu den Nuten, die nicht zur Drehmomentübertragung genutzt werden, zur Fluidführung zu bilden.

Zudem ist es von Vorteil, wenn die drehmomentübertragende Verbindung durch in den Rotorblechen ausgebildete Nuten und ein separat von den Rotorblechen ausgebildetes Kopplungselement, das drehfest mit der Rotorwelle verbunden ist, gebildet ist. Mit anderen Worten wird im Gegensatz zu einer klassischen Feder-Nut-Verbindung zur Verbindung der Rotorbleche das Kopplungselement, etwa die Feder, separat ausgebildet. Dadurch muss an der Rotorblechgeometrie anstelle eines das Kopplungselement bildenden Vorsprungs eine Nut, in die das Kopplungselement eingreift, vorgesehen werden. Somit ergeben sich in vorteilhafter Weise größere Gestaltungsmöglichkeiten für die Rotorbleche, da auch mehrere Nuten vorgesehen werden können, und erst bei der Montage ausgewählt werden muss, welche Nut mit dem Kopplungselement verbunden wird, um eine bestimmte Ausrichtung in Umfangsrichtung zu erzielen.

Gemäß einer bevorzugten Ausführungsform kann die drehmomentübertragende Verbindung als eine Feder-Nut-Verbindung ausgebildet sein, wobei das Kopplungselement separat von der Rotorwelle ausgebildet ist. Vorzugsweise ist das Kopplungselement als eine Feder, etwa nach Art einer Passfeder, ausgebildet. Durch die Ausbildung der Feder als separates Bauteil muss die konstruktive Gestaltung der Rotorwelle nicht verändert werden. Zudem kann eine separate Feder besonders einfach und kostengünstig hergestellt werden. Alternativ ist es auch möglich, das Kopplungselement integral mit der Rotorwelle auszubilden.

Insbesondere ist es bevorzugt, wenn die Rotorbleche jeweils um einen vorbestimmten Winkel zu einem axial benachbarten Rotorblech verdreht angeordnet sind. Dadurch kann vorteilhafterweise ein Verschränkung des Rotors vorgehalten werden, was sich positiv auf das Geräuschverhalten auswirkt. Gemäß einer vorteilhaften Ausführungsform sind die Rotorbleche um einen konstanten Winkel zueinander verdreht.

Zudem ist es von Vorteil, wenn in jedem Rotorblech mehrere Nuten ausgebildet sind, die um den vorbestimmten Winkel zueinander versetzt angeordnet sind. Dadurch wird ermöglicht, die Verschränkung des Rotors zu realisieren, indem die Nut, in die das Kopplungselement eingesetzt wird, je nach gewünschter Versetzung relativ zu der Rotorwelle und damit relativ zu den anderen Rotorblechen, ausgewählt werden kann. Dadurch kann die Verdrehung der Rotorbleche bei der Montage der Rotorbleche festgelegt werden. Zudem ist es dadurch ermöglicht, dass das gleiche Rotorblech an verschiedenen Positionen im Rotorblechpaket, d.h. mit unterschiedlichen Relativverdrehungen zu der Rotorwelle, eingesetzt werden kann. Mit anderen Worten muss bei der Montage die "richtige" Nut für die drehmomentübertragende Verbindung ausgewählt werden, um die Verschränkung zu realisieren.

Auch ist es zweckmäßig, wenn der Rotor mehrere in Umfangsrichtung gleichverteilt angeordnete Pole aufweist, wobei der vorbestimmte Winkel so gewählt ist, dass die Pole des Rotors verschränkt sind. Das heißt, dass der vorbestimme Winkel unterschiedlich zu einem Polwinkel, in dem die Pole in Umfangsrichtung angeordnet sind, ist. Dadurch wird die Verschränkung der Pole über die Axialrichtung des Rotorblechpakets erreicht.

Ferner ist es bevorzugt, wenn jede der mehreren Nuten einer Position des Rotorblechs im Rotorblechpaket zugeordnet ist. Das heißt, dass je nach der vorgesehenen Position des jeweiligen Rotorblechs im Rotorblechpaket eine andere Nut für die Verbindung zur Rotorwelle verwendet wird. Mit anderen Worten ist jede der Nuten in den Rotorblechen genau einer Position im Rotorblechpaket zugeordnet.

In einer bevorzugten Ausführungsform kann der vorbestimmte Winkel, um den die Nuten in einem Rotorblech zueinander versetzt angeordnet sind, der Summe aus einem Polwinkel, der einem Winkelabstand zwischen den Polen des Rotors entspricht, oder einem Vielfachen des Polwinkels und einem Verschränkungswinkel, um den die Pole verschränkt sind, entsprechen. Somit können die Nuten geeignet über den Innenumfang des Rotorblechs verteilt werden, so dass sie sich nicht gegenseitig überlappen.

Besonders bevorzugt ist es, wenn die Rotorbleche über mehrere drehmomentübertragende Verbindungen mit der Rotorwelle verbunden sind. Dadurch kann die Kraft besser zwischen der Rotorwelle und dem Rotorblechpaket übertragen werden. Dementsprechend sind beispielsweise jeweils zwei Nuten je Rotorblech über zwei Kopplungselemente mit zwei Nuten in der Rotorwelle verbunden.

Gemäß einer vorteilhaften Weiterbildung können die mehreren drehmomentübertragenden Verbindungen in Umfangsrichtung gleichverteilt angeordnet sein. Dadurch wird die Kraftübertragung gleichmäßig über die Rotorbleche bzw. gleichmäßig über den Umfang der Rotorwelle verteilt.

Mit anderen Worten betrifft die Erfindung auch einen Rotor mit einem Blechpaket, wobei in Rotorblechen des Blechpakets unterschiedliche Nuten ausgebildet sind, mit einer Welle mit einer Nut und mit einer Feder zur Momentenübertragung zwischen jeweils einer Nut eines Rotorblechs und der Rotorwelle. Erfindungsgemäß wird durch die Kombination aus einer klassischen Feder-Nut-Verbindung mittels einer separates Feder und dem Einsatz von unterschiedlich angeordneten Nuten im Blechpaket eine Anzahl an unterschiedlichen Rotorblechen verringert, da das gleiche Rotorblech mehrfach im Rotorblechpaket verwendet werden kann. Die Nuten sind dabei so angeordnet, dass pro Nut der richtige Verschränkungswinkel vorgehalten wird. Bei der Montage wird je nach Blechpaketposition eine andere Nut verwendet. Hierdurch wird der richtige Verschränkungswinkel der Blechpakete sichergestellt. Die Kraftübertragung erfolgt über eine oder mehrere Federn, nach Art einer Passfeder.

Die Erfindung wird nachfolgend mit Hilfe von Zeichnungen erläutert. Es zeigen:
Fig. 1 eine perspektivische Darstellung eines erfindungsgemäßen Rotors,
Fig. 2 eine Frontansicht des Rotors,
Fig. 3 eine Frontansicht eines Rotorblechs des Rotors,
Fig. 4 eine perspektivische Ansicht des Rotorblechs,
Fig. 5 eine Ansicht von oben eines Rotorblechpakets aus fünf Rotorblechen,
Fign. 6 und 7perspektivische Ansichten einer Rotorwelle des Rotors mit einem Kopplungselement und ohne ein Kopplungselement,
Fig. 8 ein vergrößerter Ausschnitt aus Fig. 2,
Fig. 9 eine Schnittansicht des Rotors, geschnitten entlang der Linie IX-IX aus Fig. 8, und
Fig. 10 eine Schnittansicht des Rotors, geschnitten entlang der Linie X-X aus Fig. 8.

Die Figuren sind lediglich schematischer Natur und dienen ausschließlich dem Verständnis der Erfindung. Die gleichen Elemente sind mit denselben Bezugszeichen versehen.

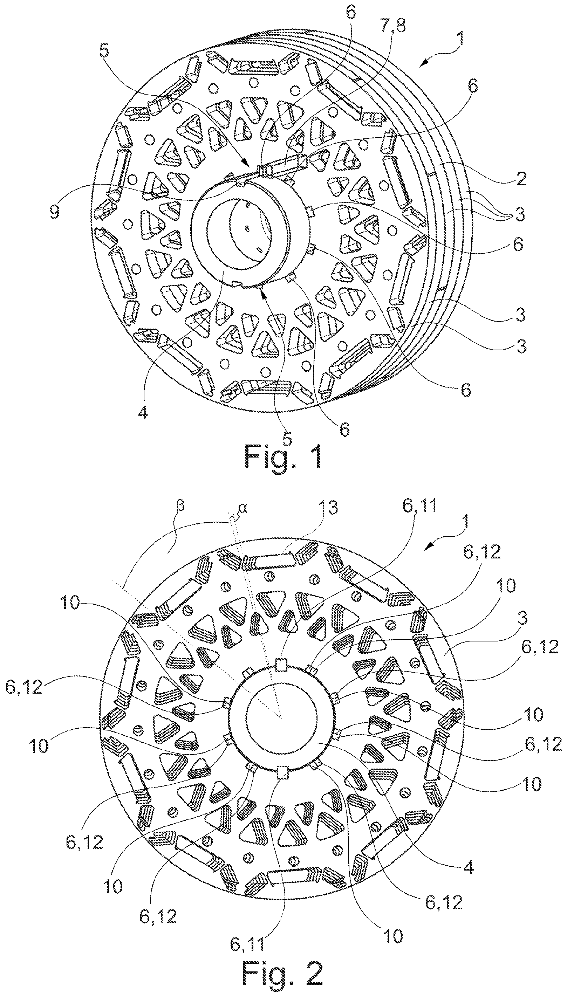

Fig. 1 zeigt einen erfindungsgemäßen Rotor 1 für eine E-Maschine. Der Rotor 1 weist ein Rotorblechpaket 2 aus mehreren in Axialrichtung geschichteten Rotorblechen 3 auf. Das Rotorblechpaket 2, genauer gesagt, Pole des Rotors 1, die in dem Rotorblechpaket 2 angeordnet werden, weist bzw. weisen eine sogenannte Verschränkung oder Verdrehung auf. Das heißt, dass die Rotorbleche 3 um einen vorbestimmten Verdrehungswinkel γ zueinander verdreht angeordnet sind. Dadurch wird eine Verschränkung der Pole des Rotors 1 erreicht. Insbesondere sind die Rotorbleche 3 jeweils um den Verdrehungswinkel γ zu einem axial benachbarten Rotorblech 3 verdreht angeordnet. Insbesondere ist der Verdrehungswinkel γ zwischen axial benachbarten Rotorblechen 3 konstant.

Der Rotor 1 weist eine Rotorwelle 4 auf. Die Rotorbleche 3 sind auf die Rotorwelle 4, insbesondere auf einen Außenumfang der Rotorwelle 4, aufgesteckt. Die Rotorwelle 4 ist drehfest mit den Rotorblechen 3 verbunden. Die Rotorwelle 4 ist über eine drehmomentübertragende Verbindung 5 mit in den Rotorblechen 3 ausgebildeten Nuten 6 verbunden. Die Verbindung 5 wird durch ein Kopplungselement 7, das von den Rotorblechen 3 separat ausgebildet ist, und die Nuten 6 der Rotorbleche 3 gebildet. Das Kopplungselement 7 ist in der dargestellten Ausführungsform separat von der Rotorwelle 4 ausgebildet, kann aber alternativ auch integral mit der Rotorwelle 4 ausgebildet sein, auch wenn dies nicht dargestellt ist. Das Kopplungselement 7 ist in der dargestellten Ausführungsform als eine Feder 8, insbesondere nach Art einer Passfeder, ausgebildet. Die Feder 8 greift in eine Nut 9 in der Rotorwelle 4 und in die Nuten 6 der Rotorbleche 3 ein, um die Rotorbleche 3 durch einen Formschluss drehfest an der Rotorwelle 4 festzulegen. In der dargestellten Ausführungsform ist die Verbindung 5 also als eine Feder-Nut-Verbindung ausgebildet. In der dargestellten Ausführungsform ist jedes Rotorblech 3 über zwei Federn 8 mit der Rotorwelle 4, insbesondere mit den Nuten 9 der Rotorwelle 4, verbunden. Die Rotorbleche 3 können aber auch über eine Feder oder über mehr als zwei Federn mit der Rotorwelle 4 verbunden sein, auch wenn dies nicht dargestellt.

Die Nuten 6 der Rotorbleche 3 sind an einem radialen Innenumfang der Rotorbleche 3 angeordnet. Die Nuten 6 erstrecken sich in Axialrichtung durchgehend durch das jeweilige Rotorblech 3. Die Nuten 6 weisen einen im Wesentlichen rechteckigen Querschnitt auf. Die Nuten 6 weisen jeweils den gleichen Querschnitt auf, der einem Teilquerschnitt des Kopplungselements 6 und/oder einem Querschnitt der Nut 9 in der Rotorwelle 4 entspricht.

Fig. 2 zeigt eine Frontansicht des Rotors 1. In den Rotorblechen 3 sind mehrere Nuten 6, in der dargestellten Ausführungsform zehn Nuten 6, über den Innenumfang verteilt angeordnet. Die Anordnung, die Höhe und/oder insbesondere die Breite der Nuten 6 sind so auf den Verdrehungswinkel γ abgestimmt, dass durch die Nuten 6 ein sich in Axialrichtung durchgehend durch das Rotorblechpaket 2 erstreckender Kanal 10 gebildet wird. Der Kanal 10 kann beispielsweise zur Kühlmittelführung für den Rotor 1 verwendet werden. Von den Nuten 6 dient zumindest eine Drehmoment-Nut 11 zur Drehmomentübertragung und zumindest eine andere Kühlmittel-Nut 12 zur Kühlmittelführung.

In der Frontansicht von Fig. 2 lässt sich die Verdrehung des Rotorblechpakets 2 gut erkennen. In den Rotorblechen 3 sind Polaussparungen 13 für Pole des Rotors 1 vorgesehen. Die Polaussparungen 13 sind in den Rotorblechen 3 über den Umfang gleichverteilt angeordnet. Das heißt, dass die Polaussparungen 13 eines Rotorblechs 3 in konstanten Winkelabständen mit einem Polwinkel β beabstandet angeordnet sind. Der Polwinkel β entspricht also 360° geteilt durch die Anzahl der Pole des Rotors 1, in dem dargestellten Ausführungsbeispiel 36°. Die Polaussparung 13 eines Rotorblechs 3 ist um den Verschränkungswinkel α zu einer Polaussparung 13 eines axial benachbarten Rotorblechs 3 verdreht angeordnet. Dieser Verschränkungswinkel α und die dadurch realisierte Versetzung der Rotorbleche 3 ist in Fig. 2 an den Polaussparungen 13 (oder an anderen Aussparungen in den Rotorblechen 3) zu erkennen.

Jedes Rotorblech 3 des Rotorblechpakets 2 weist zumindest so viele Nuten 6 auf wie das Rotorblechpaket 2 Rotorbleche 3 besitzt. Die Nuten 6 sind dabei so angeordnet, dass durch sie der vorbestimmte Verdrehungswinkel α der Rotorbleche 3 vorgehalten wird. Dabei wird für jedes Rotorblech 3 des Rotorblechpakets 2 je nach der Position des Rotorblechs 3 im Rotorblechpaket eine andere Nut 6 verwendet, über die das jeweilige Rotorblech 3 mit der Rotorwelle 4 verbunden wird. In der dargestellten Ausführungsform wird das Rotorblechpaket 2 aus fünf Rotorblechen 3 gebildet. Das Rotorblechpaket 2 kann aber auch weniger als fünf oder mehr als fünf Rotorbleche 3 aufweisen, auch wenn dies nicht dargestellt ist. Dementsprechend weist jedes Rotorblech 3 zumindest fünf Nuten 6 auf.

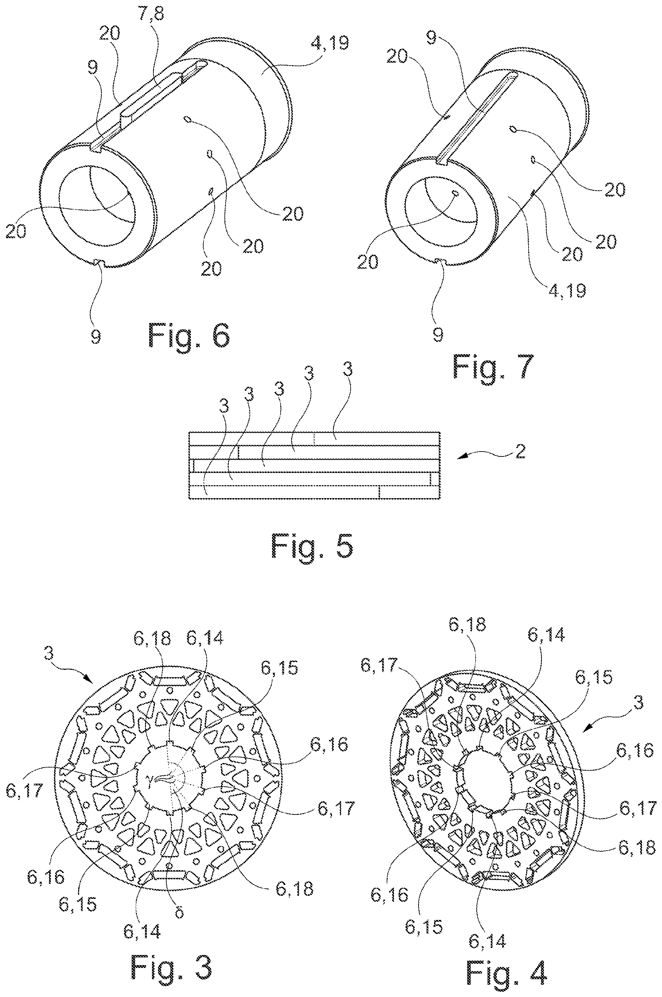

Eine Anordnung der Nuten 6 wird mit Bezug auf Fign. 3 und 4, in denen ein einzelnes Rotorblech 3 dargestellt ist, beschrieben. Das Rotorblech 3 weist eine erste Nut 14, eine zweite Nut 15, eine dritte Nut 16, eine vierte Nut 17 und eine fünfte Nut 18 der Nuten 6 auf. Je nach dem, an welcher Position des Rotorblech 3 in dem Rotorblechpaket 2 angeordnet ist, dient die erste Nut 14, die zweite Nut 15, die dritte Nut 16, die vierte Nut 17 oder die fünfte Nut 18 als die Drehmoment-Nut 11, über die das Rotorblech 3 drehmomentübertragend mit der Rotorwelle 4 verbunden ist. Beispielsweise dient die erste Nut 14 für ein erstes Rotorblech 3, das eine axiale Stirnseite des Rotorblechpakets 2 ausbildet, als die Drehmoment-Nut 11, die zweite Nut 15 für ein zweites Rotorblech 3, das axial benachbart zu dem ersten Rotorblech 3 ist, als die Drehmoment-Nut 11, die dritte Nut 16 für ein drittes Rotorblech 3, das axial benachbart zu dem zweiten Rotorblech 3 ist, als die Drehmoment-Nut 11, usw.

Dabei sind in jedem Rotorblech 3 die erste Nut 14, die zweite Nut 15, die dritte Nut 16, die vierte Nut 17 und die fünfte Nut 18 ausgebildet, so dass erst bei der Montage die Position festgelegt wird und die der Position im Rotorblechpaket 2 entsprechende Nut als die Drehmoment-Nut 11 mit der Feder 7 verbunden wird. Die übrigen Nuten 6 werden als die Kühlmittel-Nuten 12 verwendet.

Um die Verschränkung der Pole des Rotors 1 zu erreichen, ist die Anordnung der Nuten 6 auf den Verschränkungswinkel α abgestimmt. Insbesondere entspricht ein Winkelabstand zwischen den Nuten 6, insbesondere zwischen der ersten Nut 14 und der zweiten Nut 15 bzw. zwischen der zweiten Nut 15 und der dritten Nut 16, bzw. zwischen der dritten Nut 16 und der vierten Nut 17 usw. dem Verdrehungswinkel γ. Der Verdrehungswinkel γ entspricht der Summe aus dem Verschränkungswinkel α und dem Polwinkel β oder der Summe aus dem Verschränkungswinkel α und dem einem Vielfachen des Polwinkels β. Mit anderen Worten sind die Nuten 6, die für in Axialrichtung benachbarte Rotorbleche 3 als Drehmoment-Nut 11 vorgesehen sind, beispielsweise die erste Nut 14 und die zweite Nut 15, so angeordnet, dass zwei Pole axial benachbarter Rotorbleche 3 um den Verschränkungswinkel α versetzt sind. Da die Pole in regelmäßigen Winkelabständen, nämlich im Abstand des Polwinkels β, angeordnet sind, sind die Nuten 6, die für in Axialrichtung benachbarte Rotorbleche 3 als Drehmoment-Nut 11 vorgesehen sind, um den Verschränkungswinkel α und ein beliebiges Vielfache des Polwinkels β zueinander versetzt. Dementsprechend ist die dritte Nut 16 um den zweifachen Verschränkungswinkel α und ein beliebiges Vielfache des Polwinkels β zu der ersten Nut 14 versetzt.

In der dargestellten Ausführungsform sind die Abstände, das heißt der Verdrehungswinkel γ, zwischen den Nuten 6, die für in Axialrichtung benachbarte Rotorbleche 3 als Drehmoment-Nut 11 vorgesehen sind, gleich. Insbesondere entspricht der Verdrehungswinkel γ der Summe aus dem Verschränkungswinkel α und dem Polwinkel β. Das heißt, dass der Abstand zwischen der ersten Nut 14 und der dritten Nut 16 2γ beträgt. Das heißt auch, dass der Abstand zwischen der ersten Nut 14 und der vierten Nut 17 3γ beträgt. Das heißt, dass der Abstand zwischen der ersten Nut 14 und der fünften Nut 18 4γ beträgt.

Da in der dargestellten Ausführungsform des Rotors 1 zwei Federn 8 vorgesehen sind, um die drehmomentübertragende Verbindung 5 zu bilden, weisen die Rotorbleche zwei erste Nuten 14, zwei zweite Nuten 15, zwei dritte Nuten 16, zwei vierte Nuten 17 und zwei fünfte Nuten 18 auf, wobei sich die ersten Nuten 14, die zweiten Nuten 15, die dritten Nuten 16, die vierten Nuten 17 und/oder die fünften Nuten 18 jeweils in Umfangsrichtung gegenüberliegen. Dadurch dass die Nuten 6 zusätzlich zu dem Polwinkel β um den Verschränkungswinkel α versetzt sind, ist der Abstand eines Winkels δ zwischen der fünften Nut 18 und der ersten Nut 14 unterschiedlich zu dem Abstand des Verdrehungswinkel γ zwischen den anderen in Umfangsrichtung benachbarten Nuten 6.

Somit können sich alle Nuten 6, der axial benachbarten Rotorbleche 3, vollständig deckungsgleich angeordnet werden. Die Nuten 6, insbesondere die Breite der Nuten 6, wird dabei so auf den Verdrehungswinkel γ (und damit auf den Verschränkungswinkel α und den Polwinkel β) und damit auf die Anordnung der Nuten 6 abgestimmt, dass der Kanal 10, der durch die Kühlmittel-Nuten 12 gebildet wird, axial durchgehend ist. Das heißt, dass sich die Querschnitte der Kühlmittel-Nuten 12 zumindest teilweise überlappen.

Fig. 5 zeigt eine Ansicht des Rotorblechpakets 2 von oben, in der zu erkennen ist, dass die einzelnen Rotorbleche 3 zueinander verdreht angeordnet sind. Die Rotorbleche 3 sind um den gleichen Verdrehungswinkel γ zueinander verdreht, was durch die Krümmung der Rotorbleche 3 in der Ansicht von oben anders scheint.

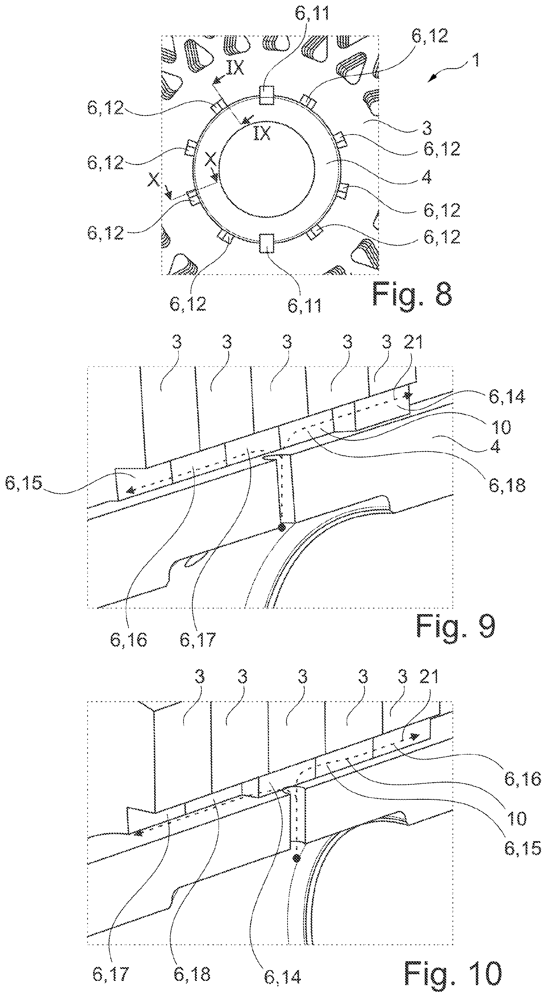

Fign. 6 und 7 zeigen perspektivische Darstellungen der Rotorwelle 4 mit der Feder 8 (vergleiche Fig. 6) und ohne die eingesetzt Feder 8 (vergleiche Fig. 8). Die Rotorwelle 4 ist als eine Hohlwelle 19 ausgebildet. Auf dem Außenumfang der Rotorwelle 4 ist die Nut 9 eingebracht, die eine konstante Tiefe besitzt. In der dargestellten Ausführungsform weist die Rotorwelle 4 zwei Nuten 9 auf, die gegenüberliegend angeordnet sind. Die Nut 9 erstreckt sich in Axialrichtung länger als die Feder 8. Die Nut 9 ist zu einer axialen Stirnseite der Rotorwelle 4 geöffnet. Dadurch kann die Feder 8 in Axialrichtung eingeschoben werden. Die Feder 8 weist eine größere axiale Erstreckung als das Rotorblechpaket 2 auf.

Die Rotorwelle 4 weist zumindest einen sich in Radialrichtung erstreckenden Kanal 20 auf, der einen Innenumfang der Rotorwelle 4 mit dem Außenumfang der Rotorwelle 4 verbindet. Der Kanal 19 dient zur Führung von Kühlmittel. In der dargestellten Ausführungsform sind mehrere Kanäle 20 ausgebildet. Die Kanäle 20 sind so angeordnet, dass sie in die Nuten 6, insbesondere in die Kühlmittel-Nuten 12, münden, wenn die Rotorbleche 3 auf die Rotorwelle 4 montiert sind. Dadurch kann Kühlmittel aus einem Inneren der Rotorwelle 4 durch die Kanäle 20 in die Kühlmittel-Nuten 12 zu den Rotorblechen 3 geführt werden.

Fign. 9 und 10 zeigen perspektivischen Schnittansichten des Rotors 1, die entlang der Linie IX-IX aus Fig. 8 bzw. entlang der Linie X-X aus Fig. 8 geschnitten wurden. Eine gepunktete Linie in Fign. 9 und 10 deuten einen Kühlmittelfluss 21 von dem Inneren der Rotorwelle 4 durch den Kanal 10 an. In Fig. 9 ist zu erkennen, dass sich die zweite Nut 15, die dritte Nut 16, die vierte Nut 17 und die fünfte Nut 18 vollständig überlappen, und zwischen der fünften Nut 18 und der ersten Nut 14 ein Versatz ausgebildet ist. Dadurch überlappen sich die erste Nut 14 und die fünfte Nut 18 nur teilweise. Durch die teilweise Überlappung zwischen allen Nuten 6, wird der durchgehende axiale Kanal 10 gebildet. In Fig. 10 ist zu erkennen, dass sich die vierte Nut 17 und die fünfte Nut 18 vollständig überlappen, zwischen der fünften Nut 18 und der ersten Nut 14 ein Versatz ausgebildet ist, und sich die erste Nut 14, die zweite Nut 15 und die dritte Nut 16 vollständig überlappen. Dadurch überlappen sich die erste Nut 14 und die fünfte Nut 18 nur teilweise. Durch die teilweise Überlappung zwischen allen Nuten 6, wird der durchgehende axiale Kanal 10 gebildet. Je nach dem durch welche der Kühlmittel-Nuten 12 geschnitten wird, befindet sich der Versatz an einer anderen Stelle im Rotorblechpaket 2. In der Drehmoment-Nut 11 überlappen sich alle Nuten 6 in Axialrichtung vollständig.

### Bezugszeichenliste

1 Rotor
2 Rotorblechpaket
3 Rotorblech
4 Rotorwelle
5 Verbindung
6 Nut
7 Kopplungselement
8 Feder
9 Nut
10 Kanal
11 Drehmoment-Nut
12 Kühlmittel-Nut
13 Polaussparung
14 erste Nut
15 zweite Nut
16 dritte Nut
17 vierte Nut
18 fünfte Nut
19 Hohlwelle
20 Kanal
21 Kühlmittelfluss

- α: Verschränkungswinkel
- β: Polwinkel
- γ: Verdrehungswinkel
- δ: Winkel

## Patentansprüche

1. Rotor (1) für eine elektrische Maschine, mit einem Rotorblechpaket (2), das mehrere axial geschichtete Rotorbleche (3), die jeweils um einen vorbestimmten Verdrehungswinkel zu einem axial benachbarten Rotorblech (3) angeordnet sind, aufweist, und mit einer Rotorwelle (4), auf der die Rotorbleche (3) aufgesteckt sind, wobei die Rotorwelle (4) eine drehmomentübertragende Verbindung (5) mit in den Rotorblechen (3) ausgebildeten Nuten (6) bildet, wobei der Verdrehungswinkel und die Breite der Nuten (6) so aufeinander abgestimmt sind, dass ein sich axial durch den Rotor (1) hindurch erstreckender Kanal (10) zur Fluidführung gebildet wird, wobei in jedem Rotorblech (3) mehrere Nuten (6) ausgebildet sind, wobei zumindest eine der Nuten (6, 11) zur Drehmomentübertragung und zumindest eine andere der Nuten (6, 12) zur Fluidführung dient.

2. Rotor (1) nach Anspruch 1, wobei die Rotorwelle (4) als eine Hohlwelle (19) ausgebildet ist, in der zumindest ein sich radial durchgehend erstreckender Fluidkanal (20), der in die Nuten (6, 12) mündet, ausgebildet ist.

3. Rotor (1) nach einem der vorherigen Ansprüche, wobei in jedem Rotorblech (3) zumindest so viele Nuten (6) ausgebildet sind wie Rotorbleche (3) ein Rotorblechpaket (2) bilden, wobei je nach axialer Position im Rotorblechpaket (2) eine andere der Nuten (6) die drehmomentübertragende Verbindung (5) bildet.

4. Rotor (1) nach Anspruch 3, wobei die Nuten (6), die nicht die drehmomentübertragende Verbindung (5) bilden, zur Fluidführung dienen.

5. Rotor (1) nach einem der vorherigen Ansprüche, wobei der Verdrehungswinkel so gewählt ist, dass er eine Verschränkung der Rotorbleche (3) vorhält.

6. Rotor (1) nach einem der vorherigen Ansprüche, wobei eine der Nuten (6), die die drehmomentübertragende Verbindung (5) zwischen der Rotorwelle (4) und einem ersten Rotorblech (3) bildet, zu einer anderen der Nuten (6), die die drehmomentübertragende Verbindung (5) zwischen der Rotorwelle (4) und einem Rotorblech (3), das axial benachbart zu dem ersten Rotorblech (3) ist, bildet, um den Verdrehungswinkel versetzt angeordnet ist.

7. Rotor (1) nach einem der vorherigen Ansprüche, wobei eine der Nuten (6), die die drehmomentübertragende Verbindung (5) zwischen der Rotorwelle (4) und einem ersten Rotorblech (3) bildet, zu einer anderen der Nuten (6), die die drehmomentübertragende Verbindung (5) zwischen der Rotorwelle (4) und einem Rotorblech (3), das axial beabstandet zu dem ersten Rotorblech (3) ist, bildet, um einen Winkel, der unterschiedlich zu dem Verdrehungswinkel ist, versetzt angeordnet ist.

8. Rotor (1) nach einem der vorherigen Ansprüche, wobei die Rotorwelle (4) durch eine oder mehrere Feder-Nut-Verbindungen mit den in den Rotorblechen (3) ausgebildeten Nuten (6) zur Drehmomentübertragung verbunden ist.

9. Rotor (1) nach einem der vorherigen Ansprüche, wobei die Rotorbleche (3) als Gleichteile ausgebildet sind.

## Claims

1. A rotor (1) for an electric machine, having a rotor laminate stack (2) which has a plurality of axially stacked rotor laminations (3) which are each arranged at a predetermined angle of twist relative to an axially adjacent rotor lamination (3), and having a rotor shaft (4) on which the rotor laminations (3) are mounted, wherein the rotor shaft (4) forms a torque-transmitting connection (5) with grooves (6) formed in the rotor laminations (3), wherein the angle of twist and the width of the grooves (6) are coordinated with one another in such a way that a channel (10) for fluid guidance extending axially through the rotor (1) is formed, wherein a plurality of grooves (6) are formed in each rotor lamination (3), wherein at least one of the grooves (6, 11) is used for torque transmission and at least one other of the grooves (6, 12) is used for fluid guidance.

2. The rotor (1) according to claim 1, wherein the rotor shaft (4) is designed as a hollow shaft (19), in which at least one fluid channel (20) extending continuously in the radial direction and opening into the grooves (6, 12) is formed.

3. The rotor (1) according to one of the preceding claims, wherein at least as many grooves (6) are formed in each rotor lamination (3) as rotor laminations (3) form a rotor laminate stack (2), wherein, depending on the axial position in the rotor laminate stack (2), a different one of the grooves (6) forms the torque-transmitting connection (5).

4. The rotor (1) according to claim 3, wherein the grooves (6) that do not form the torque-transmitting connection (5) are used for fluid guidance.

5. The rotor (1) according to one of the preceding claims, wherein the angle of twist is selected such that it prevents interlocking of the rotor laminations (3).

6. The rotor (1) according to one of the preceding claims, wherein one of the grooves (6) forming the torque-transmitting connection (5) between the rotor shaft (4) and a first rotor lamination (3) is arranged with an angular offset relative to another of the grooves (6) forming the torque-transmitting connection (5) between the rotor shaft (4) and a rotor lamination (3) that is axially adjacent to the first rotor lamination (3) corresponding to the angle of twist.

7. The rotor (1) according to one of the preceding claims, wherein one of the grooves (6) forming the torque-transmitting connection (5) between the rotor shaft (4) and a first rotor lamination (3) is arranged with an angular offset relative to another of the grooves (6) forming the torque-transmitting connection (5) between the rotor shaft (4) and a rotor lamination (3) that is axially spaced from the first rotor lamination (3) by an angle different from the angle of twist.

8. The rotor (1) according to one of the preceding claims, wherein the rotor shaft (4) is connected for torque transmission to the grooves (6) formed in the rotor laminations (3) by one or a plurality of tongue-and-groove connections.

9. The rotor (1) according to one of the preceding claims, wherein the rotor laminations (3) are formed as identical parts.

## Revendications

1. Rotor (1) pour une machine électrique, comportant un empilement de tôles de rotor (2) qui présente plusieurs tôles de rotor (3) stratifiées axialement, qui sont respectivement agencées selon un angle de rotation prédéterminé par rapport à une tôle de rotor (3) axialement adjacente, et comportant un arbre de rotor (4) sur lequel sont montées les tôles de rotor (3), dans lequel l'arbre de rotor (4) forme une liaison de transmission de couple (5) avec des rainures (6) formées dans les tôles de rotor (3), dans lequel l'angle de rotation et la largeur des rainures (6) sont coordonnés de telle sorte qu'un canal (10) s'étendant axialement à travers le rotor (1) est formé pour le guidage de fluide, dans lequel plusieurs rainures (6) sont formées dans chaque tôle de rotor (3), dans lequel au moins une des rainures (6, 11) sert à la transmission de couple et au moins une autre des rainures (6, 12) sert au guidage de fluide.

2. Rotor (1) selon la revendication 1, dans lequel l'arbre de rotor (4) est conçu comme un arbre creux (19) dans lequel est formé au moins un canal de fluide (20) s'étendant radialement de manière continue, qui débouche dans les rainures (6, 12).

3. Rotor (1) selon l'une quelconque des revendications précédentes, dans lequel au moins autant de rainures (6) sont formées dans chaque tôle de rotor (3) que de tôles de rotor (3) forment un empilement de tôles de rotor (2), dans lequel, en fonction de la position axiale dans l'empilement de tôles de rotor (2), une autre des rainures (6) forme la liaison de transmission de couple (5).

4. Rotor (1) selon la revendication 3, dans lequel les rainures (6) qui ne forment pas la liaison de transmission de couple (5) servent au guidage de fluide.

5. Rotor (1) selon l'une quelconque des revendications précédentes, dans lequel l'angle de rotation est choisi de telle sorte qu'il assure un entrelacement des tôles de rotor (3).

6. Rotor (1) selon l'une quelconque des revendications précédentes, dans lequel l'une des rainures (6) qui forme la liaison de transmission de couple (5) entre l'arbre de rotor (4) et une première tôle de rotor (3) est agencée de manière décalée de l'angle de rotation par rapport à une autre des rainures (6) qui forme la liaison de transmission de couple (5) entre l'arbre de rotor (4) et une tôle de rotor (3) qui est axialement adjacente à la première tôle de rotor (3).

7. Rotor (1) selon l'une quelconque des revendications précédentes, dans lequel l'une des rainures (6) qui forme la liaison de transmission de couple (5) entre l'arbre de rotor (4) et une première tôle de rotor (3) est agencée de manière décalée d'un angle, qui est différent de l'angle de rotation, par rapport à une autre des rainures (6) qui forme la liaison de transmission de couple (5) entre l'arbre de rotor (4) et une tôle de rotor (3) qui est axialement espacée de la première tôle de rotor (3).

8. Rotor (1) selon l'une quelconque des revendications précédentes, dans lequel l'arbre de rotor (4) est relié par une ou plusieurs liaisons à rainure et languette aux rainures (6) formées dans les tôles de rotor (3) pour la transmission de couple.

9. Rotor (1) selon l'une quelconque des revendications précédentes, dans lequel les tôles de rotor (3) sont conçues comme des pièces identiques.
